Europäisches Patentamt

European Patent Office

Office européen des brevets

(19)

(11) Veröffentlichungsnummer : **0 209 772**
**B1**

# (12) EUROPÄISCHE PATENTSCHRIFT

(45) Veröffentlichungstag der Patentschrift :
28.09.88

(21) Anmeldenummer : 86109160.1

(22) Anmeldetag : 04.07.86

(51) Int. Cl.⁴ : **E 05 C 17/00**, B 60 J 7/08,
B 62 D 25/10

(54) Sperrvorrichtung für die Verdeck- und Heckklappe eines Kraftfahrzeugs.

(30) Priorität : 24.07.85 DE 3526471

(43) Veröffentlichungstag der Anmeldung :
28.01.87 Patentblatt 87/05

(45) Bekanntmachung des Hinweises auf die Patenterteilung : 28.09.88 Patentblatt 88/39

(84) Benannte Vertragsstaaten :
DE FR GB IT

(56) Entgegenhaltungen :
US-A- 2 800 361
US-A- 3 052 496

(73) Patentinhaber : BAYERISCHE MOTOREN WERKE
Aktiengesellschaft
Postfach 40 02 40 Petuelring 130 - AJ-36
D-8000 München 40 (DE)

(72) Erfinder : Wegge, Martin
Fürstenbergstrasse 3
D-8000 München 40 (DE)

(74) Vertreter : Dexheimer, Rolf
Bayerische Motoren Werke Aktiengesellschaft Postfach 40 02 40 Petuelring 130 - AJ-31
D-8000 München 40 (DE)

**Beschreibung**

Die Erfindung bezieht sich auf eine Sperrvorrichtung für die Verdeck- und Heckklappe eines Kraftfahrzeugs mit Faltverdeck, mit den im Oberbegriff des Hauptanspruchs angegebenen Merkmalen.

Eine derartige Sperrvorrichtung ist bereits aus der US-A-2 800 361 bekannt, die eine Berührung der Verdeck- und Heckklappe über eine die Relativbewegungen der Verdeck- und Heckklappe einschränkende Vorrichtung verhindert. Diese besteht im wesentlichen aus einem Schwenkhebel, der an einem Ende mit der Verdeck- oder Heckklappe schwenkbar verbunden ist und einen bogenförmigen Schlitz aufweist, der von einem von der anderen Verdeck- oder Heckklappe abstehenden Zapfen durchsetzt ist. Beim gleichzeitigen Öffnen der Verdeck- und Heckklappe wird der Zapfen bis zum Anliegen an einem Endbereich in dem Schlitz verlagert. Beim weiteren Öffnen der Verdeck- oder Heckklappe wird über den Zapfen auf den Schwenkhebel eine Kraft ausgeübt, wodurch sich die andere Verdeck- oder Heckklappe schließt. Ein wesentlicher Nachteil dieser Sperrvorrichtung ist, daß die Verdeck- und Heckklappe an U-förmig ausgebildeten Tragarmen zu befestigen sind, die Hebelarme bilden, die bei der Kraftübertragung ein entsprechendes Moment erzeugen. Die stark gekrümmten Tragarme erfordern einen entsprechenden Freiraum, der den Aufnahmeraum für das Faltverdeck und den Kofferraum des Fahrzeugs einschränkt. Beim Öffnen und Schließen der Verdeck- und Heckklappe wird auch der Schwenkhebel der Sperrvorrichtung verschwenkt. Zur Freigängigkeit des Schwenkhebels ist ebenfalls ein Freiraum vorzusehen. Durch die gegenläufigen Bewegungen der Tragarme und des Schwenkhebels besteht die Gefahr, sich an diesen Teilen zu verletzen, wenn nicht entsprechende Schutzvorkehrungen getroffen werden.

Der Erfindung liegt die Aufgabe zugrunde, eine Sperrvorrichtung für die Verdeck- und Heckklappe eines Kraftfahrzeugs mit Faltverdeck nach dem Oberbegriff des Hauptanspruchs anzugeben, die eine unauffällige und verletzungssichere Anordnung der Sperrvorrichtung ermöglicht und nur einen geringen Bauraum erfordert.

Diese Aufgabe ist dadurch gelöst, daß jeder Schwenkhebel von der Verdeck- und Heckklappe entfernt um eine karosseriefeste Schwenkachse schwenkbar und im Abstand von dieser Schwenkachse mit einem Seil oder einer Stange verbunden ist und mit dem Seil oder der Stange an der betreffenden Verdeck- oder Heckklappe angreift. Besonders vorteilhaft ist, daß bei dieser Sperrvorrichtung die Bewegungen der Verdeck- und Heckklappe über einfache Seile oder Stangen an eine andere Stelle übertragen werden, an der die zur Einschränkung der Bewegungen der Verdeck- und Heckklappe vorgesehenen Schwenkhebel günstig anzuordnen sind. Dies kann beispielsweise an einem verdeckten Wandabschnitt erfolgen, der nicht ohne weiteres zugänglich ist. In diesem Fall sind die Schwenkhebel mit geringem Aufwand abzudecken, da der Wandabschnitt einen Teil der Abdeckung bildet.

Vorteilhafte Ausgestaltungen der Erfindung sind Gegenstand von Unteransprüchen.

Ein Ausführungsbeispiel der Erfindung wird anhand eines Ausführungsbeispiels erläutert. Es zeigen

Fig. 1 eine Draufsicht der Sperrvorrichtung, mit zwei über Bowdenzüge begrenzt gegeneinander schwenkbaren Schwenkhebeln,

Fig. 2 eine entsprechende Seitenansicht, einschließlich den beiden Seilanlenkungen an dem Verdeck- und Heckklappenträger.

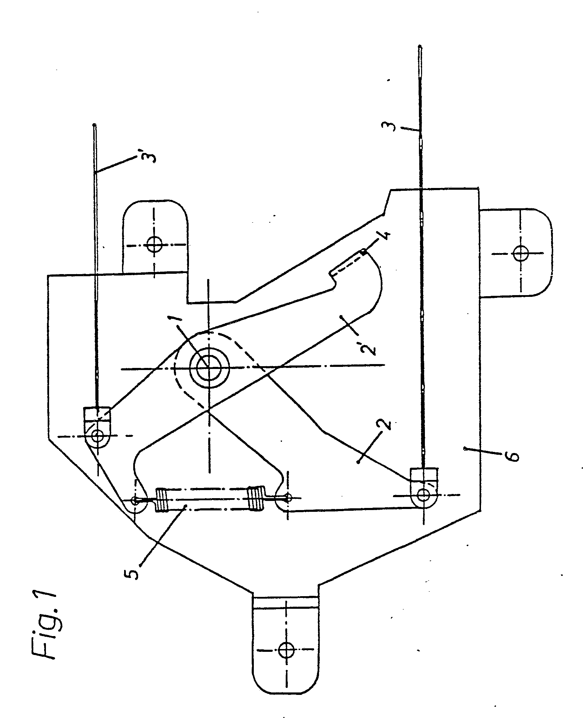

In Fig. 1 ist eine Sperrvorrichtung als Baueinheit in Draufsicht kurz vor dem Einbau in ein Kraftfahrzeug mit Faltverdeck dargestellt, die eingebaut eine Berührung der Verdeck- und Heckklappe verhindert. Die Sperrvorrichtung weist dabei zwei um eine gemeinsame Schwenkachse 1 unabhängig voneinander schwenkbare Schwenkhebel 2, 2' auf, die im Abstand von der gemeinsamen Schwenkachse 1 jeweils ein Ende eines Seiles 3, 3' drehbar lagern. Einer der beiden Hebel ist als zweiarmiger Schwenkhebel 2' mit etwa gegenüberliegenden Hebelarmen ausgebildet, von denen einer das Seil 3' und der andere an seinem abstehenden Ende einen Anschlag 4 aufnimmt. Mit den Schenkeln der beiden die Seilenden lagernden Schwenkhebel 2, 2' ist eine Zugfeder 5 verbunden, die im eingebauten Zustand der Sperrvorrichtung die beiden Seile 3, 3' auf Zug beansprucht. Bei dem Ausführungsbeispiel ist der Anschlag 4 an dem zweiarmigen Schwenkhebel 2' durch einen rechtwinkelig bis zur Ebene des anderen Schwenkhebels 2 abgebogenen Abschnitt gebildet. Ebenso könnte der Anschlag aber auch durch ein anderes, beispielsweise separates Bauteil gebildet sein, das von einem Schwenkteil verlagert wird und mit dem anderen Schwenkteil zusammenwirkt. Anstelle einer gemeinsamen Schwenkachse 1 könnte auch für jedes Schwenkteil eine eigene Schwenkachse vorgesehen sein. Auch ist es zum Beispiel möglich, als Schwenkteil das Koppelglied eines Viergelenkgetriebes zu verwenden, wobei der Anschlag an dem Koppelglied oder an einem der Schwenkglieder ausgebildet sein kann. Bei dem Ausführungsbeispiel ist die gemeinsame Schwenkachse 1 an einer Befestigungsplatte 6 ausgebildet, die vom Kofferraum her von unten mit dem Boden des Verdeckkastens verbindbar ist, der eine vordere obere Begrenzungswand des Kofferraumes bildet. Die Schwenkteile könnten aber auch an einem Lagerbock oder dergleichen gelagert sein. Im Boden des Verdeckkastens sind etwa in Zugrichtung der Seile 3, 3' verlaufende Langlöcher ausgebildet. Die Befestigung der Sperrvorrichtung an der Fahrzeugkarosserie kann beispielsweise dadurch erfolgen, daß zunächst bei geöffneter Verdeckklappe Schrauben durch die Langlöcher in entsprechende Gewinde in der unterhalb des Bodens befindlichen Befestigungsplatte 6 lediglich so weit eingeschraubt werden, daß die Befestigungsplatte 6 in Längsrichtung der Langlöcher verschiebbar bleibt. Sodann werden die freien Seilenden im Abstand von den Schwenkachsen mit dem jeweils zugeordneten Verdeckklappen- und Heckklappenträger verbunden und die Heckklappe geschlossen, wobei die Befestigungsplatte 6 zusammen mit den Schrauben bis zu den Langlochenden zurückverlagert werden kann. Über den geöffneten Verdeckkasten kann nunmehr die Sperrvorrichtung über die Schraubenköpfe so weit nach vorne geschoben werden, bis der Anschlag 4 bei vollständig geöffneter Verdeckklappe an dem einarmigen Schwenkhebel 2 zur Anlage kommt. In dieser Lage wird die Befestigungsplatte 6 durch Anziehen der Schrauben fixiert.

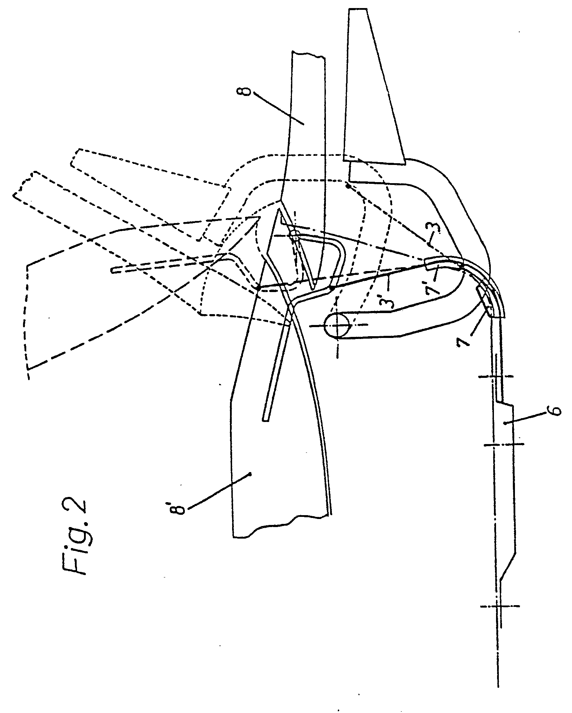

Eine Seitenansicht der Sperrvorrichtung ist in Fig. 2 dargestellt, wobei die jeweilige Schließ- und Offenstellung der Verdeck- 8′ und Heckklappe 8 angedeutet ist. Um die beiden Seile 3, 3′ vor Beschädigung zu schützen, sind diese größtenteils von je einer biegsamen Seilhülle mit Abstand umgeben. Ferner sind zur Abstützung und Umlenkung der Seile 3, 3′ zu den Anlenkstellen an Verdeck- 8′ und Heckklappe 8 Seilführungen 7, 7′ vorgesehen, die mit der Befestigungsplatte 6 oder über entsprechende Halter mit der Karosserie verbunden sind. Die Seilführungen 7, 7′ sind zur Aufnahme der Seilhüllen ausgebildet und fixieren diese zumindest bereichsweise. Bei dem Ausführungsbeispiel werden zur Bewegungsübertragung der Verdeck- 8′ und Heckklappe 8 auf die Schwenkteile Seile 3, 3′ verwendet. Es ist aber selbstverständlich auch möglich, dafür Stangen oder Stangengetriebe, eventuell unter Zwischenschaltung von Umlenkhebeln, zu verwenden.

## Patentansprüche

1. Sperrvorrichtung für die Verdeck- (8′) und Heckklappe (8) eines Kraftfahrzeugs mit Faltverdeck, die sich in ihren Schwenkbereichen überlagern, wobei im Abstand von der jeweiligen Klappachse an der Verdeck- sowie Heckklappe je ein Schwenkhebel angreift und an einem Schwenkhebel ein Anschlag ausgebildet ist, der auf die dem anderen Schwenkhebel zugeordnete Verdeck- oder Heckklappe derart einwirkt, daß entweder ein Öffnen dieser Verdeck- oder Heckklappe verhindert oder beim Öffnen der Verdeck- oder Heckklappe die jeweils andere Verdeck- oder Heckklappe geschlossen wird, dadurch gekennzeichnet, daß jeder Schwenkhebel (2, 2′) von der Verdeck (8′) und Heckklappe (8) entfernt um eine karosseriefeste Schwenkachse (1) schwenkbar und im Abstand von dieser Schwenkachse (1) mit einem Seil (3, 3′) oder einer Stange verbunden ist und mit dem Seil (3, 3′) oder der Stange an der betreffenden Verdeck- (8′) oder Heckklappe (8) angreift.

2. Sperrvorrichtung nach Anspruch 1, dadurch gekennzeichnet, daß beide Schwenkhebel (2, 2′) um eine gemeinsame Schwenkachse (1) unabhängig voneinander drehbar gelagert sind.

3. Sperrvorrichtung nach Anspruch 1, dadurch gekennzeichnet, daß das Seil (3, 3′) von einer Feder auf Zug belastet ist.

4. Sperrvorrichtung nach Anspruch 1 und 3, dadurch gekennzeichnet, daß die Feder eine Zugfeder (5) ist, die mit ihren Enden an beiden Schwenkhebeln (2, 2′) mit Abstand zur jeweiligen Schwenkachse (1) befestigt ist.

5. Sperrvorrichtung nach Anspruch 1 oder 2, dadurch gekennzeichnet, daß der Anschlag (4) an einem Ende eines zweiarmigen Schwenkhebels (2′) ausgebildet ist, an dessen anderem Ende das Seil (3′) oder die Stange angreift.

6. Sperrvorrichtung nach Anspruch 5, dadurch gekennzeichnet, daß der Anschlag (4) durch einen rechtwinkelig bis zur Ebene des anderen Schwenkhebels (2) abgebogenen Abschnitt an einem Schwenkhebel (2′) ausgebildet ist.

7. Sperrvorrichtung nach Anspruch 2, dadurch gekennzeichnet, daß die beiden Schwenkhebel (2, 2′) an einem mit der Karosserie verbindbaren Lagerbock gestützt sind.

## Claims

1. A blocking device for the bonnet flap (8′) and boot lid (8) of a motor vehicle with a movable bonnet flap, which flap and lid overlap in their pivoting ranges, wherein a respective pivot lever acts in each case on the bonnet flap and the boot lid at a distance from the respective pivot spindle, and on one pivot lever a stop is formed which acts upon the bonnet flap or boot lid associated with the other pivot lever in such a way that either opening of this bonnet flap or boot lid is prevented or, into the opening of the bonnet flap or boot lid, the other of these in each case is closed, characterised in that each pivot lever (2, 2′) is pivotable, at a distance from the bonnet flap (8′) and boot lid (8), about a pivot spindle (1) fast with the bodywork and is connected at a distance from this pivot spindle (1) with a cable (3, 3′) or a rod, and acts with the cable (3, 3′) or the rod on the respective bonnet flap (8′) or boot lid (8).

2. A blocking device according to Claim 1, characterised in that both pivot levers (2, 2′) are mounted mutually independently for rotation about a common pivot spindle (1).

3. A blocking device according to Claim 1, characterised in that the cable (3, 3′) is subjected to tension loading by a spring.

4. A blocking device according to Claims 1 and 3, characterised in that the spring is a tension spring (5) which is secured at its ends to the two pivot levers (2, 2′) at a distance from the respective pivot spindle (1).

5. A blocking device according to Claim 1 or 2, characterised in that the stop (4) is formed on one end of a two-arm pivot lever (2′), on the other end of which the cable (3′) or the rod acts.

6. A blocking device according to Claim 5, characterised in that the stop (4) is formed by a section on one pivot lever (2'), which section is bent away at right angles as far as the plane of the other pivot lever (2).

7. A blocking device according to Claim 2, characterised in that the two pivot levers (2, 2') are supported on a bracket connectable with the bodywork.

**Revendications**

1. Dispositif de blocage de la capote (8') et du hayon (8) d'un véhicule automobile décapotable qui sont supportés, dans leur zone de pivotement, ou espacés sur chacun des axes de pivotement, s'engage un levier pivotant sur la capote et sur le hayon, et où une butée est formée sur un des leviers pivotants qui agit sur la capote et le hayon associé à l'autre levier pivotant, de façon à empêcher soit une ouverture de cette capote ou de ce hayon, soit quand l'un est ouvert, de fermer l'autre, caractérisé en ce que chaque levier pivotant (2, 2') de la capote (8') et du hayon (8) peut pivoter à distance autour d'un axe d'articulation (1) solidaire de la carrosserie et est relié avec un intervalle par rapport à cet axe d'articulation (1) par un câble (3, 3') ou des tringles et s'engage par ce câble (3, 3') ou cette tringle sur la capote (8') ou le hayon (8) concernés.

2. Dispositif de blocage selon la revendication 1, caractérisé en ce que les deux leviers pivotants (2, 2') sont supportés de façon à pouvoir tourner indépendamment l'un de l'autre autour d'un axe d'articulation commun (1).

3. Dispositif de blocage selon la revendication 1, caractérisé en ce que le câble (3, 34) est chargé par un ressort de traction.

4. Dispositif de blocage selon la revendication 1 et la revendication 3, caractérisé en ce que le ressort est un ressort de traction qui est fixé par ses extrémités sur les deux leviers pivotants (2, 2') avec un intervalle par rapport à chacun des axes d'articulation (1).

5. Dispositif de blocage selon la revendication 1 ou la revendication 2, caractérisé en ce que la butée (4) est formée sur une des extrémités d'un levier pivotant à deux branches (2') à l'autre extrémité duquel s'engage le câble (3') ou la tringle.

6. Dispositif de blocage selon la revendication 5, caractérisé en ce que la butée (4) est formée sur un levier pivotant (2') d'une section courbée à angle droit par rapport au plan de l'autre levier pivotant (2).

7. Dispositif de blocage selon la revendication 2, caractérisé en ce que les deux leviers pivotants (2, 2') portent sur un palier pouvant être relié à la carrosserie.

Fig.1

0 209 772

Fig. 2